# EUROPEAN PATENT SPECIFICATION

(11) **EP 3 616 521 B1**
(45) Date of publication and mention of the grant of the patent: **26.04.2023**
(21) Application number: 18862425.8
(22) Date of filing: 09.03.2018
(51) Int. Cl.: A21C 9/06, A21C 9/08, A21C 11/10, A21C 11/16, A21C 9/04

(54) **STUFFED FOOD FORMING METHOD**
VERFAHREN ZUR HERSTELLUNG VON GEFÜLLTEN LEBENSMITTELN
PROCÉDÉ DE FORMATION D'ALIMENTS FOURRÉS

(30) Priority: 30.09.2017 CN 201710913612
(43) Date of publication of application: 04.03.2020
(73) Proprietor: Shanghai Soontrue Machinery Equipment Co., Ltd., Shanghai 210700 (CN)
(72) Inventor: HUANG, Song, Shanghai 201700 (CN)
(74) Representative: Osterhoff, Utz
(86) International application number: PCT/CN2018/078536
(87) International publication number: WO 2019/062033

(56) References cited:
- CA-A1- 2 286 524
- CN-A- 105 851 109
- CN-U- 203 801 585
- CN-U- 205 756 904
- CN-U- 206 061 979
- CN-U- 206 150 320
- CN-Y- 201 160 466
- JP-A- 2003 052 299
- US-A- 3 633 517
- US-A1- 2012 219 674
- US-A1- 2015 079 243
- US-A1- 2017 064 967

## Description

### TECHNICAL FIELD

The present application relates to a technical field of food processing, and more particularly to a method for forming stuffed food.

### BACKGROUND

The volume of the apparatus for forming stuffed food is usually large, especially the dough wrapper processing device. How to miniaturize stuffed food forming machine has been a difficult problem in the field of food processing.

The Chinese patent application CN200820062031.X (filing date: Jan. 29, 2018, application name "DUMPLING MAKING MACHINE") disclosed a dumpling making machine which includes a dough wrapper feeding device, a stuffing injection device, a dumpling shaping device, a discharge tailstock and a driving device. The dumpling forming device includes a horizontal station rotary table body, a forming mold disposed on the surface of the rotary table body, a dough wrapper feeding apparatus, a dough wrapper receiving station and a stuffing receiving station which are corresponding to the stuffing injection device and are disposed on the rotary table body. A jacking device is arranged at a folding station, one side of a dumpling pushing station is provided with a pushing device, and the other side of the dumpling pushing station is provided with the discharge tailstock. The mold is flattened, clamped, opened, and unfolded in different stations under the control of a guide rail.

Furthermore, a Chinese patent application CN201610274834.0 (filing date: Apr. 28, 2016, application name "COMPACT STUFFED FOOD FORMING MACHINE") disclosed a compact stuffed food forming machine which belongs to the technical field of food processing and in particular to a compact stuffed food forming machine. The compact stuffed food forming machine includes a framework and a station rotary table body located on the framework. A dough wrapper forming device, a stuffing injection device, a pressing device and a discharge device are respectively disposed around the station rotary table body. A wrapper forming station is disposed on the wrapper forming device; a stuffing injection station is disposed on the stuffing injection device; a pressing station is disposed on the pressing device; and a discharging station is disposed on the discharging device. A split shaping mold is further disposed on the framework, and the split shaping mold includes a rotary wrapper receiving plate and a molding cup.

US20120219674A1 discloses a dumpling producing method and a dumpling producing device. The method comprises the following steps: cutting a mechanically sheeted dough sheet of a unidirectional texture into dumpling wrappers of a predefined shape, filling the stuffing into the dumpling sheet, and wrapping the dumpling wrapper along a fold line at an angle of 0 to 20 degrees to the texture orientation of each dumpling wrapper to produce the dumplings. The device comprises: a cutting mechanism consisting of a cutting unit and a rotating unit, wherein the rotating unit is configured to cause an angle formed between the texture orientation of the dumping wrapper and the fold line to be within 0 to 20 degrees.

Neither of the above technologies has proposed a convenient and space-saving solution to process the dough and recycle the dough wrapper residues after cutting. As a result, the volume of the whole forming apparatus cannot be further reduced. At the same time, the wrapper residues recycle device is complicated and requires multiple control points, thus inducing high failure rate and high maintenance and operation costs.

### SUMMARY

In order to solve the problem that the volume of the stuffed food forming machine can not be further reduced, the present application provides a method for forming stuffing food capable of effectively processing the dough and recucling the dough wrapper residues.

In order to achieve the above purpose, the present application provides:
a method for forming stuffed food, including the following steps:
Step 1: sending and cutting.
   A shaping mold on a rotary table body is arranged below a sending and cutting station. A dough wrapper is cut into a specified shape from a dough belt and falls on the shaping mold below. A dough residue enters an opening on the rotary table body and is transported downwardly to be collected.
Step 2: injecting.
   The shaping mold after receiving the dough wrapper is driven by the rotary table body to rotate to a stuffing injection station where the stuffing is injected onto the dough wrapper.
Step 3: pressing and shaping.
   The shaping mold after injecting is driven by the rotary table body to rotate to a pressing and shaping station where the dough wrapperis pressed and shaped.
Step 4: discharging.

The shaping mold after pressing and shaping is driven by the rotary table body to rotate to a discharge station where a final product is discharged.

A stuffed food forming machine is provided to perform the above method, which includes a framework; a rotary table assembly arranged on the framework and defining the opening configured to collect the dough residue; the sending and cutting station; and the stuffing injection station. At least the sending and cutting station and the stuffing injection station are arranged around the rotary table assembly. A distance between an internal side of the shaping mold and a center of the rotary table assembly is larger than a distance between an internal side of the opening and the center of the rotary table assembly. The stuffed food mentioned in the present application may inlude stuffed foods such as dumplings, sweet dumplings, buns and Siu-mai. Taking the process of making dumplings as an example, the uncut dough is called a dumpling wrapper dough belt. Wrappers cut from the dumpling wrapper dough belt by the cutter are called dough wrappers, and the remaining dough is called dough residue. When a distance between an internal side of the shaping mold and a center of the rotary table assembly is larger than a distance between an internal side of the opening and the center of the rotary table assembly, the dough residue may easily drop into the opening, so as to be collected.

A sending and cutting part is preferably provided at the sending and cutting station. A stuffing injection part is preferably provided at the stuffing injection station. The sending and cutting part and the stuffing injection part may adopt conventional structures. The sending and cutting station and stuffing injection station are provided around the rotary table assembly while other processing stations may be provided inside the rotary table body or at other positions.

A pressing and shaping station and a discharge station are preferably arranged in sequence around the rotary table assembly and beside the stuffing injection station, wherein a pressing and shaping part is provided at the pressing and shaping station, and a discharge part is provided at the discharge station. The pressing and shaping part and the discharge part may adopt conventional structures.

The structure of the rotary table assembly is as follows.

The rotary table assembly includes the rotary table body defining the opening configured to collect the dough residue, and a plurality of the shaping molds evenly distributed on the rotary table body. A distance between the internal side of the shaping mold and a center of the rotary table body is larger than a distance between the internal side of the opening and the center of the rotary table body. The opening is a through hole penetrating the rotary table body. When a distance between an internal side of the shaping mold and a center of the rotary table assembly is larger than a distance between an internal side of the opening and the center of the rotary table assembly, the dough residue may easily drop into the opening, so as to be collected.

Preferably, the opening is continuously defined on the rotary table body, namely, there is no break along the opening, which guarantees a continuous collection of the dough residue when the rotary table body is rotating. The structure of the opening must be continuously arranged to collect the dough residue while the rotary table body is rotating.

When the opening is circular, it may be defined at the center of the rotary table body. When the opening is annular, it may be defined at the center or a center-outward position of the rotary table body.

Preferably, the opening penetrates an upper surface and a lower surface of the rotary table body.

Relative positions of the shaping molds and the opening are preferably as follows
Upper surfaces of the plurality of shaping molds are located above an upper surface of the opening, and the plurality of shaping molds are arranged outside the opening.

Or upper surfaces of the plurality of shaping molds are located above an upper surface of the opening, and projections of the plurality of shaping molds in a vertical direction partially or completely falls within the opening.

A structure of the rotary table body is preferably as follows.

The rotary table body is rectangular, circular or irregular.

A rotation sleeve connected with a worm wheel is connected to a bottom of the rotary table body. The worm wheel is connected with a worm screw, and the worm screw is connected with a motor.

A structure of a rail is preferably as follows.

A base is arranged under the rotary table body. A guiding plate is arranged between the base and the rotary table body, and the guilding plate is a cylinder as a whole. A first guiding rail is defined on an external surface of the guiding plate, and the first guiding rail cooperates with a first roller on a catch plate on the shaping mold to move the catch plate up and down.

The guiding plate is a continuous cylinder.

At least one disconnected portion is defined on the cylinder of the guiding plate. The disconnected portion is partly or entirely disconnected. The guiding plate may be provided at stations where structures of the shaping molds move up and down. The guiding plate is not needed for stations where height will not be adjusted.

A second guiding rail is defined on an edge of the base, and the second guiding rail cooperates with a second roller of the molding cup on the shaping mold to move the molding cup up and down.

The working principle of the rotary table assembly is preferably as follows.

The motor drives the rotary table body to rotate the shaping molds which are connected to the rotary table body. The dough residue after cutting enters the opening on the rotary table body, so as to be collected. A base and a guiding plate which are arranged under the rotary table body are separated from the rotary table body and are static during working. A guiding rail is provided on both the base and the guiding plate respectively. Guiding rollers on the shaping molds are guided by the guiding rail to drive a catch plate and the molds to move up and down respectively.

The working principle of the guiding rail is preferably as follows.

Specifically, the shaping molds adopts conventional structure. Each shaping mold includes a catch plate connected with a first roller below through a first connecting rod; and a molding cup provided in the catch plate and connected with a second roller below through a second connecting rod. Since the shaping molds are rotated with the rotating disc while the guiding plate and the base remain still, the catch plate moves up and down by the first roller moving along a wave-shaped track in the first guiding rail on the external surface of the guiding plate. The second guiding rail cooperates with the second roller to move the molding cups up and down. As a result, different parts of the shaping molds move up and down at different stations.

The structure of the sending and cutting part is preferably as follows.

The sending and cutting part includes a guiding pillar; a cylinder sleeve sleeved on the guiding pillar; a cutter holding plate connected with the cylinder sleeve and connected with an eccentric wheel through a connecting rod, where the eccentric wheel is driven by a motor directly; a cutter mounted under the cutter holding plate; a cutting plate arranged under the cutter; and a cutter hole defined on the cutting plate corresponding to the cutter. The cutter hole cooperates with the cutter to cut the dough wrappers.

The sending and cutting part further includes: two dough wrapper supporters laterally arranged; two dough feeding rollers mounted between the two dough wrapper supporters in sequence and driven directly by a motor; a plurality of auxiliary rollers arranged between the two dough feeding rollers, where the cutting plate is arranged between the plurality of auxiliary rollers and no conveyor belt which is essential to the conventional machines is need; a supporting pillar provided on an external side of each dough wrapper supporter and provided with the guiding pillar on a top end; a groove defined on an external end of each dough wrapper supporter and configured to accommodate a dough belt roller, where the dough belt is wound to rolls by the dough belt rollers which are placed in the grooves; a driven roller provided above the dough feeding roller; and a drive belt connected the two dough feeding rollers to rotate the two dough feeding rollers synchronously.

The working principle of the sending and cutting is preferably as follows.

The dough belt is driven by the dough feeding rolle to move toward the cutter. When the dough belt is conveyed below the cutter, the motor directly drives the eccentric wheel to rotate, in such a manner the connecting rod is rotated with the eccentric wheel. The cutter holding plate is connected with and driven by the connecting rod and the cylinder sleeve to move up and down along the guiding pillar. The cutter moves up and down with the cutter holding plate and cooperates with the cutter hole on the cutting plate to cut the dough wrapper.

The structure of the stuffing injection part is preferably as follows.

The stuffing injection part includes a supporting frame; a hopper arranged on the supporting frame; a rotating base arranged on the supporting frame; a rotating valve provided inside the rotating base and driven directly by a motor to rotate; a stuffing inlet tube connecting the hopper and a top end of the rotating base; a stuffing outlet tube connected below the rotating base; a transverse injecting tube arranged on a lateral side of the rotating base; a transverse injecting rod provided inside the transverse injecting tube; a longitude injecting tube provided at an outlet of the stuffing outlet tube; a gear rack driving mechanism driving the longitude injecting tube to move up and down and provided inside the supporting frame; an eccentric wheel driving mechanism driving the transverse injecting rod to move horizontally; a screw conveyor provided inside the hopper; a worm driving mechanism driving the screw conveyor to rotate; a longitude injecting rod provided inside the longitude injecting tube and driven by the gear rack driving mechanism to move up and down inside the longitude injecting tube to push the stuffing downwardly from the outlet of the stuffing outlet tube; and an L-shaped tunnel provided inside the rotating valve. The gear rack driving mechanism, the eccentric wheel driving mechanism and the worm driving mechanism are driven separately by different motors, which means each driving mechanism is driven by a different motor.

The working principle of the stuffing injection part is preferably as follows.

The motor drives the worm driving mechanism to rotate, and the worm driving mechanism drives the screw conveyor inside the hopper to stir stuffing. The stuffing is conveyed to the rotating valve after being stirred by the screw conveyor. The motor directly drives the rotating valve to rotate by 90 degrees counter-clockwise after the rotating valve is filled with the stuffing. Then the motor drives the eccentric wheel driving mechanism to drive the transverse injecting rod to move horizontally to push the stuffing out from a bottom of the rotating valve and move the stuffing to an outlet of the stuffing outlet tube. The motor drives the gear rack driving mechanism to drive the longitude injecting rod to move up and down to push down the stuffing from the outlet of the stuffing outlet tube. The motor drives the gear rack driving mechanism to drive the longitude injecting tube to move down to push the stuffing into the dough wrapper.

The structure of the pressing and shaping part is preferably as follows.

The pressing and shaping part includes a supporting pillar; a pair of pressing molds fixed on the supporting pillar, where a top of at least one of the pressing molds is connected with a motor; two gears provided on top ends of the pair of pressing molds respectively, where the two gears are engaged with each other; two pressing blocks provided on two bottom ends of the pair of pressing molds respectively, where the two pressing blocks are opposite to each other, and pressing surfaces of the pressing blocks are curved, and one of the pressing blocks is laterally concave, and the other of the pressing blocks is laterally convex; and two semicircle rotating plates where the two gears are provided on respectively, where curved surfaces of the two rotating plates are opposite to each other.

The working principle of the pressing and shaping part is preferably as follows.

The motor drives the top of one of the pressing molds to rotate. Since the top ends of the pressing molds are engaged with each other, the top of the other of the pressing molds is driven to rotate, in such a manner the pressing blocks below press each other. Since the pressing surfaces of the pressing blocks are curved, a wave shape is formed at a sealed edge of the dough wrapper when pressing.

A method for forming the stuffed food not part of the present invention includes the following steps
step 1: starting a sending motor to convey the dough belt; and starting a stirring motor to continuously stir the stuffing;
step 2: starting a sucking and pushing motor to suck the stuffing when the dough belt is conveyed forward by the sending motor with a dumpling wrapper's length;
step 3: starting a cutter motor to cut the dough belt; and driving the rotating valve by a rotating valve motor by 90 degrees counter-clockwise; and
step 4: starting the sucking and pushing motor to push the stuffing; and driving a rotary table body by a rotary table body motor by 90 degrees.
step 5: resetting the rotating valve by the rotating valve motor; and starting an external cylinder motor and an internal cylinder motor simultaneously to respectively drive the external cylinder and the internal cylinder to move downwardly, so as to push the stuffing into the dough wrappers;
step 6: resetting the external cylinder motor and the internal cylinder motor after pushing the stuffing into the dough wrappers;
step 7: driving the rotary table body by the rotary table body motor by 90 degrees;
step 8: pressing and folding the dumplings for a while before releasing by a pressing motor; and
step 9: driving the rotary table body by the rotary table body motor by 90 degrees;
step 10: moving the dumplings to a discharge station by a discharge motor; and starting a clamping motor to clamp;
step 11: resetting the discharge motor and releasing the clamping motor, and storing the processed dumplings;
step 12: driving the rotary table body by the rotary table body motor by 90 degrees, so as to finish a whole process; and
step 13: backing to the step 1, and repeating.

The sending motor drives the dough feeding rollers of the sending and cutting part;
the stirring motor drives the screw conveyor inside the hopper of the stuffing injection part;
the sucking and pushing motor drives the transverse injecting rod of the stuffing injection part to reciprocate horizontally;
the cutter motor drives the cutter of the sending and cutting part to move up and down, so as to cut the dough wrappers;
the rotating valve motor drives the rotating valve of the stuffing injection part to rotate;
the rotary table body motor drives the rotary table body of the rotary table assembly to rotate; and
the external cylinder motor drives the longitude injecting tube of the stuffing injection part to reciprocate up and down.

The internal motor drives the longitude injecting rod of the stuffing injection part to reciprocate up and down.

The pressing motor drives the pressing mold of the pressing and shaping part to press and release;
the discharge motor drives a clamping structure of the discharge part to move; and
the clamping motor drives the clamping structure of the discharge part to clamp and release.

The above-mentioned motors may be servo motors.

The benefits of the present application are as follows.
1. According to the present application, the opening on the rotary table assembly collects the dough residue and takes full advantage of the space below the rotary table assembly. A recycling bin may be provided below the opening to collect the dough residue, or a processing mechanism may be provided below the opening to process the dough residue for reuse. The above structure does not increase the size of the machine and requires no extra space. The size of present application is compact and is able to be further reduced, which is suitable for family, canteen or small shop.
2. The present application replaces the conventional complicated driving mechanism driven by a single motor with separate motors for different parts. The improvement simplifies the driving mechanism and further reduces the space occupied by the conventional driving mechanism. As a result, the size of the stuffed food forming machine is further reduced, and the saved space may be used to arrange the dough residue collecting mechanism, thereby further optimizing the function of the stuffed food forming machine.
3. According to the present application, the opening may be in any shape, as long as it is convenient for collection of the dough residue. When the distance between an internal side of the shaping molds and a center of the rotary table assembly is larger than the distance between an internal side of the opening and the center of the rotary table assembly, no matter the shaping molds are arranged outside the opening or projections of the shaping molds in a vertical direction partially or completely fall within the structure of the opening, the dough residue may conveniently fall into the opening without extra guiding device.
4. The present application adopts worm screw and worm wheel to drive the rotation sleeve and the rotary table body to rotate. The separate driving structure replaces the complicated cam mechanism under the rotary table body and solves the problem of single motor driving all the parts. More space may be used for collection and processing of the dough residue.
5. The guiding plate cooperates with the base to move the catch plate and molding cups on the shaping mold up and down at different positions. Disconnected portions may be provided on both the first guiding rail on the guiding plate and the second guiding rail on the base, namely. the first and second guiding rails are only applied to stations where the heights need to be adjusted. Non-continuously arranged guiding rails reduce cost in material and are simple in structure.
6. Compared to conventional structures, the sending and cutting part of the present application omits an internal pushing device inside the cutter, a conveyor belt and a scraper. The eccentric wheel structure drives the cutter to cut the dough wrappers, which makes the cutting more stable, simplifies the structure and saves space.
7. The dough feeding rollers cooperate with the auxiliary rollers to transport the dough belt without the conveyor belt. Furthermore, with the driven roller above the dough feeding rollers, more frictions are provided to the dough belt, thereby smoothly moving of the dough belt and avoiding sliding.
8. Each part of the present application is driven by an individual driving mechanism and an individual motor, which avoids complicated linkage structures, simplifies the whole structure and reduces the size of the machine. The gear rack driving mechanism, the eccentric wheel driving mechanism and the worm driving mechanism provide smooth transmission to connected structures, which ensures stability.
9. The pressing molds of the present application adopt engaged gears to pressing dough wrapper edges from above. The present application improves the conventional structures and prevents squeeze on other part of the dumplings due to the conventional horizontal pressing or pressing from below, so as to maintain appearance of the dumplings. The motor drives the pressing molds to rotate directly, which simplifies the structure and ensures the forming effect.
10. The present application has fewer controlling points, low failure rate, and low maintenance and use costs.

### BRIEF DESCRIPTION OF THE ACCOMPANYING DRAWINGS

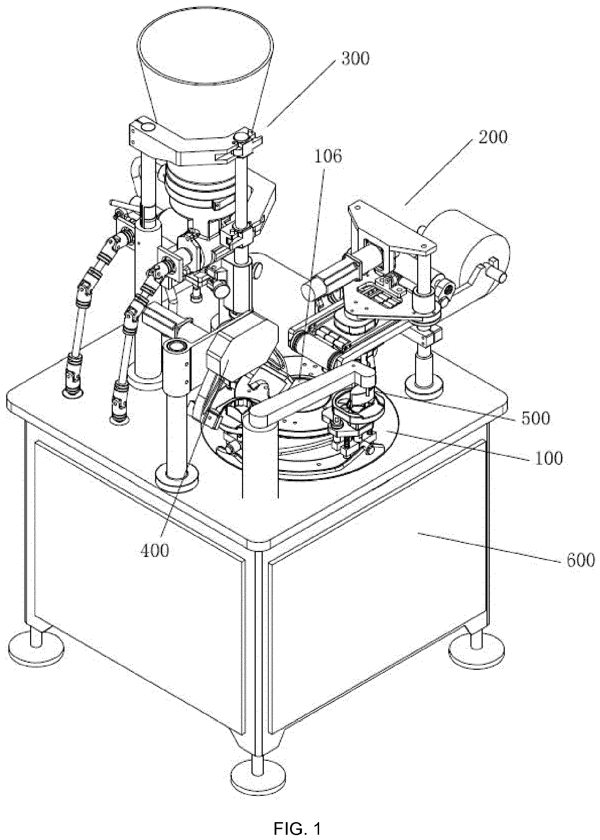

FIG. 1 is a schematic view showing an overall structure of a stuffed food forming machine;

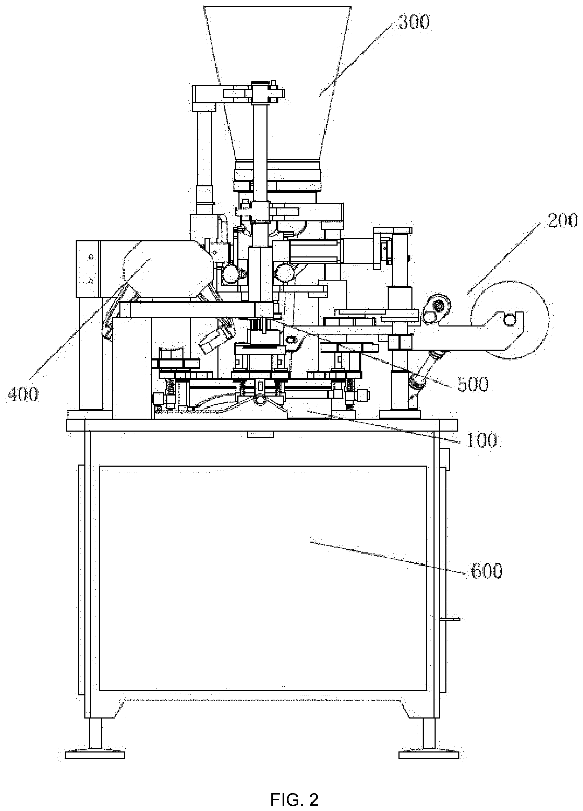

FIG. 2 is a side view showing the overall structure of the stuffed food forming machine;

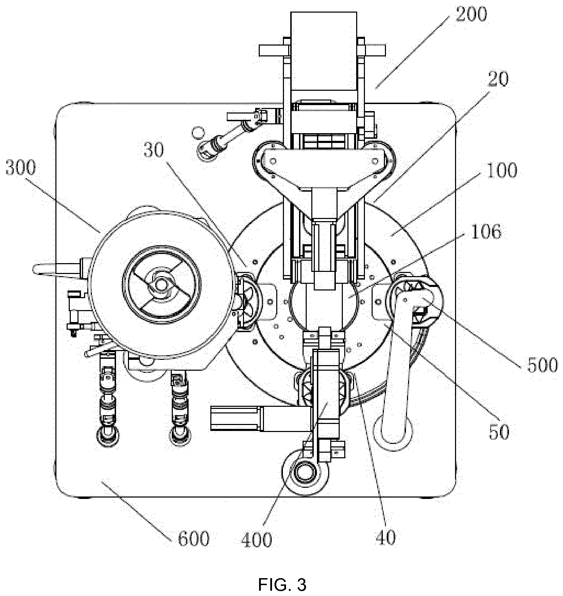

FIG. 3 is a top plan view showing the overall structure of the stuffed food forming machine;

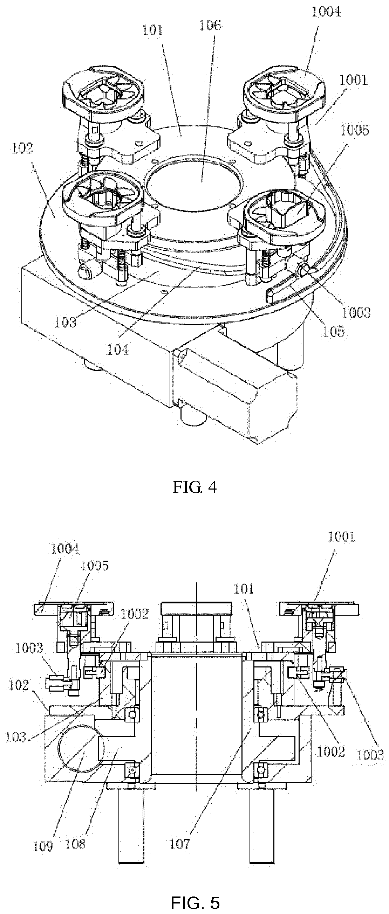

FIG. 4 is a schematic view showing an overall structure of a rotary table assembly;
FIG. 5 is a cross-sectional view of the rotary table assembly;

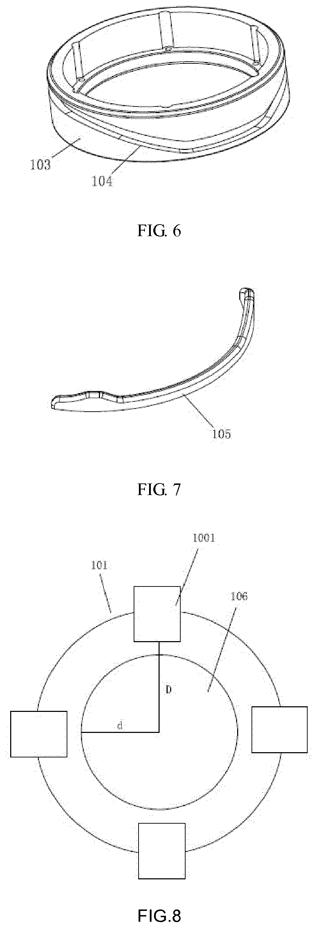

FIG. 6 is a schematic structural view of a guiding plate and a first guiding rail;
FIG. 7 is a schematic structural view of a second guiding rail on a base;
FIG. 8 illustrates that a distance D between an internal side of a shaping mold and a center of the rotary table body is larger than a distance d between an internal side of the opening and the center of the rotary table body;

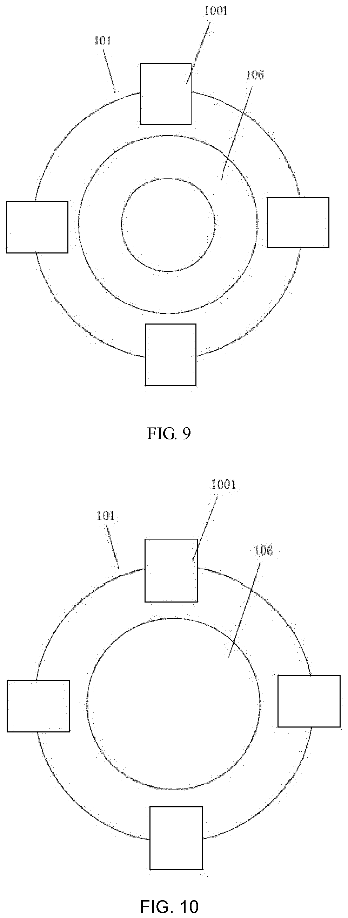

FIG. 9 is a schematic view showing a structure in which the opening is annular;
FIG. 10 illustrates that the shaping mold is located outside the opening;

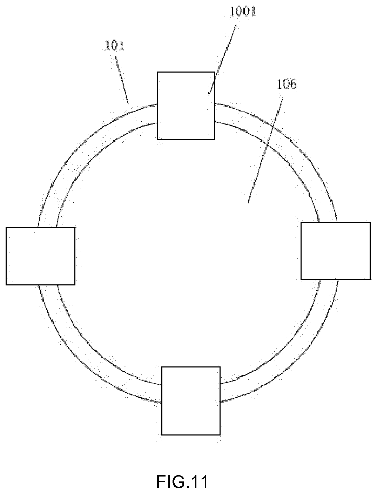

FIG. 11 illustrates that a projection of the shaping mold in a vertical direction partially or completely falls within the opening;

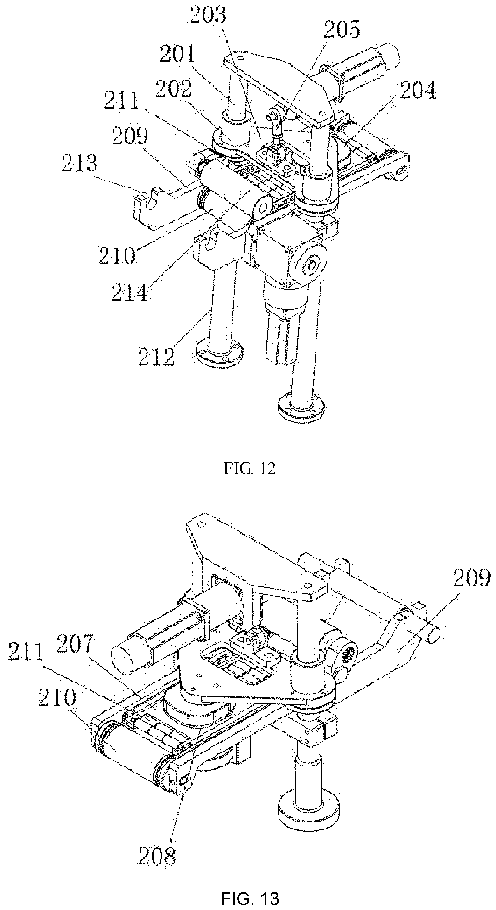

FIG. 12 is a schematic view showing an overall structure of a sending and cutting part;
FIG. 13 is a schematic view showing an overall structure of the sending and cutting part with dough feeding rollers;

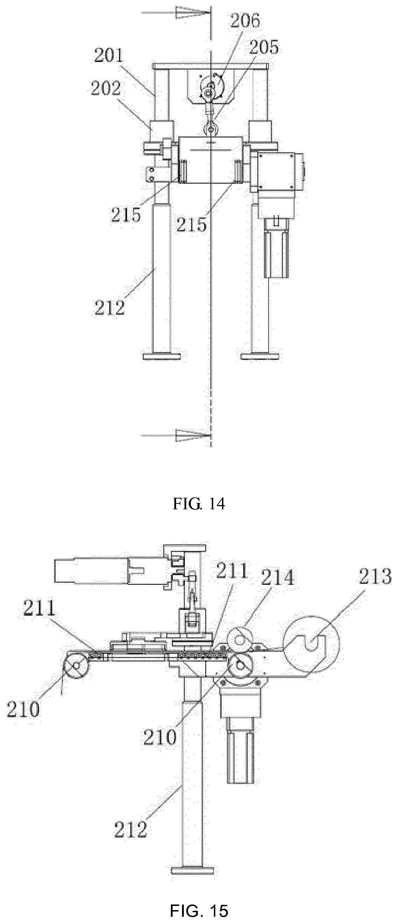

FIG. 14 is a side view of the sending and cutting part;
FIG. 15 is a cross-sectional view of the sending and cutting part;

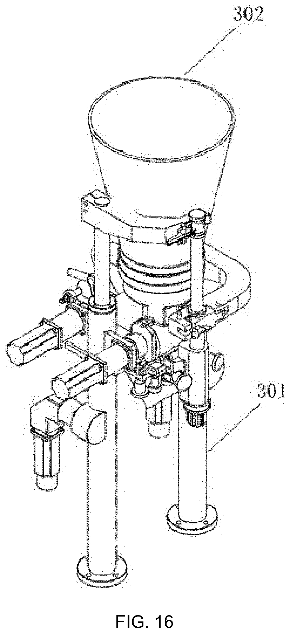

FIG. 16 is a structural schematic view of a stuffing injection part;

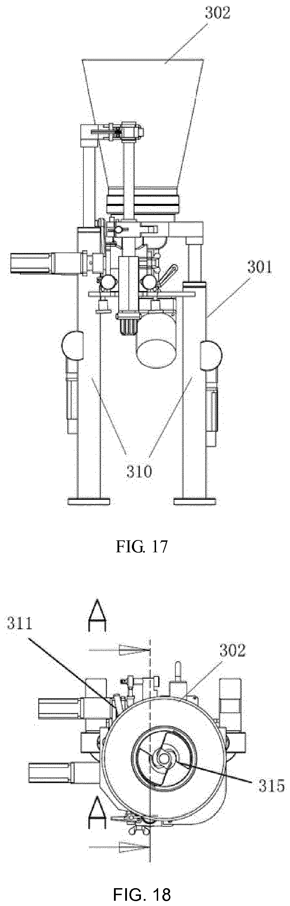

FIG. 17 is a front view of the stuffing injection part;
FIG. 18 is a top plan view of the stuffing injection part;

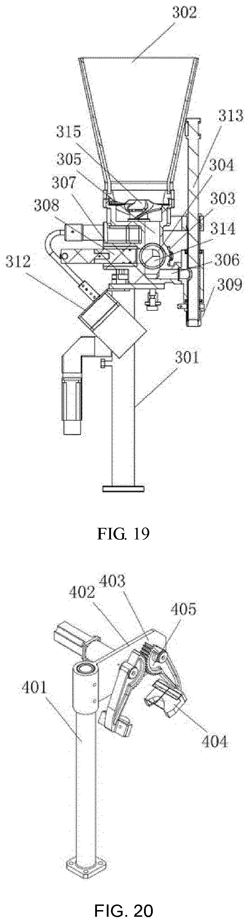

FIG. 19 is a cross-sectional view of the stuffing injection part;
FIG. 20 is a structural schematic view of a pressing and shaping part;

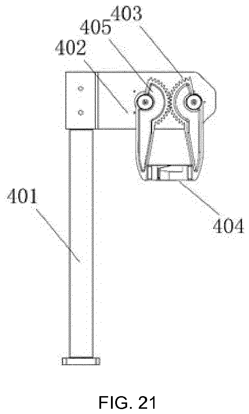

FIG. 21 is a front view of the pressing and shaping part.

Reference numerals:
sending and cutting station 20, stuffing injection station 30, pressing and shaping station 40, discharge station 50, rotary table assembly 100, sending and cutting part 200, stuffing injection part 300, pressing and shaping part 400, discharge part 500, framework 600;
rotary table body 101, base 102, guiding plate 103, first guiding rail 104, second guiding rail 105, opening 106, rotation sleeve 107, worm wheel 108, worm screw 109, shaping mold 1001, first roller 1002, second roller 1003, catch plate 1004, molding cup 1005;
guiding pillar 201, cylinder sleeve 202, cutter holding plate 203, cutter 204, connecting rod 205, eccentric wheel 206, cutting plate 207, cutter hole 208, dough wrapper supporter 209, dough feeding roller 210, auxiliary roller 211, supporting pillar 212, groove 213, driven roller 214, drive belt 215;
supporting frame 301, hopper 302, rotating base 303, rotating valve 304, stuffing inlet tube 305, stuffing outlet tube 306, transverse injecting tube 307, transverse injecting rod 308, longitude injecting tube 309, gear rack driving mechanism 310, eccentric wheel driving mechanism 311, worm driving mechanism 312, longitude injecting rod 313, L-shaped tunnel 314, screw conveyor 315; and
supporting pillar 401, pressing mold 402, gear 403, pressing block 404, rotating plate 405.

### DETAILED DESCRIPTION OF ILLUSTRATIVE EMBODIMENTS

### Embodiment 1 (not part of the present invention)

A method for forming stuffed food is provided, including the following steps:

### Step 1: sending and cutting.

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

### Embodiment 2 (not part of the present invention)

A method for forming stuffed food, including the following steps:

### Step 1: sending and cutting,

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

The method further includes the following steps:

### Step 3: pressing and shaping.

The shaping mold 1001 after injecting is driven by the rotary table body 101 to rotate to a pressing and shaping station 40 where the dough wrapper is pressed and shaped.

### Step 4: discharging.

The shaping mold 1001 after pressing and shaping is driven by the rotary table body (101) to rotate to a discharge station 50 where a final product is discharged.

### Embodiment 3

A method for forming stuffed food, including the following steps:

### Step 1: sending and cutting,

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

The method further includes the following steps:

### Step 3: pressing and shaping.

The shaping mold 1001 after injecting is driven by the rotary table body 101 to rotate to a pressing and shaping station 40 where the dough wrapper is pressed and shaped.

### Step 4: discharging.

The shaping mold 1001 after pressing and shaping is driven by the rotary table body to rotate to a discharge station 50 where a final product is discharged.

To achieve the above method, the present application provides a stuffed food forming machine, which includes a framework 600; a rotary table assembly 100 arranged on the framework 600 and defining the opening 106 configured to collect the dough residue; the sending and cutting station 20; and the stuffing injection station 30. At least the sending and cutting station 20 and the stuffing injection station 30 are arranged around the rotary table assembly 100. A distance between an internal side of the shaping mold 1001 and a center of the rotary table assembly 100 is larger than a distance between an internal side of the opening 106 and the center of the rotary table assembly 100. The stuffed food mentioned in the present application may include stuffed foods such as dumplings, sweet dumplings, buns and Siu-mai. Taking the process of making dumplings as an example, the uncut dough is called a dumpling wrapper dough belt. Wrappers cut from the dumpling wrapper dough belt by the cutter are called dough wrappers. During the cutting process, the remaining dough is called dough residue. When a distance between an internal side of the shaping mold 1001 and a center of the rotary table assembly 100 is larger than a distance between an internal side of the opening 106 and the center of the rotary table assembly 100, the dough residue may easily drop into the opening 106, so as to be collected.

A sending and cutting part 200 is provided at the sending and cutting station 20. A stuffing injection part 300 is provided at the stuffing injection station 30. The sending and cutting part 200 and the stuffing injection part 300 may adopt conventional structures. The sending and cutting station 20 and stuffing injection station 30 are provided around the rotary table assembly 100 while other processing stations may be provided inside the rotary table body or at other positions.

A pressing and shaping station 40 and a discharge station 50 are arranged in sequence around the rotary table assembly and beside the stuffing injection station 30. Where a pressing and shaping part 400 is provided at the pressing and shaping station 40, and a discharge part 500 is provided at the discharge station 50. The pressing and shaping part 400 and the discharge part 500 may adopt conventional structures.

According to the present application, the opening 106 on the rotary table assembly 100 collects the dough residue and takes full advantage of the space below the rotary table assembly 100. A recycling bin may be provided below the opening 100 to collect the dough residue, or a processing mechanism may be provided below the opening 100 to process the dough residue for reuse. The above structure does not increase the size of the machine and requires no extra space.

The present application replaces the conventional complicated driving mechanism driven by a single motor with separate motors for different parts. The improvement simplifies the driving mechanism and further reduces the space occupied by the conventional driving mechanism. As a result, the size of the stuffed food forming machine is further reduced, and the saved space may be used to arrange the dough residue collecting mechanism, thereby further optimizing the function of the stuffed food forming machine.

The rotary table assembly 100 includes the rotary table body 101 defining the opening 106 configured to collect the dough residue, and a plurality of the shaping molds 1001 evenly distributed on the rotary table body 101.A distance between the internal side of the shaping mold 1001 and a center of the rotary table body 101 is larger than a distance between the internal side of the opening 106 and the center of the rotary table body 101. The opening 106 is a through hole penetrating the rotary table body 101. When a distance between an internal side of the shaping mold 1001 and a center of the rotary table assembly 100 is larger than a distance between an internal side of the opening 106 and the center of the rotary table assembly 100, the dough residue may easily drop into the opening 106, so as to be collected.

The opening 106 is continuously defined on the rotary table body 101, namely, there is no break along the opening, which guarantees a continuous collection of the dough residue when the rotary table body 101 is rotating. The structure of the opening 106 must be continuously arranged to collect the dough residue while the rotary table body 101 is rotating.

When the opening 106 is circular, it may be defined at the center of the rotary table body 101.

When the opening 106 is annular, it may be defined at the center or a center-outward position of the rotary table body 101.

The opening 106 penetrates an upper surface and a lower surface of the rotary table body 101.

Relative positions of the shaping molds 1001 and the opening 106 are as follows.

Upper surfaces of the plurality of shaping molds 1001 are located above an upper surface of the opening 106, and the plurality of shaping molds 1001 are arranged outside the opening 106.

Or upper surfaces of the plurality of shaping molds 1001 are located above an upper surface of the opening 106, and projections of the plurality of shaping molds 1001 in a vertical direction partially or completely falls within the opening 106.

A structure of the rotary table body 101 is as follows.

The rotary table body 101 is rectangular, a circular or an irregular.

A rotation sleeve 107 connected with a worm wheel 108 is connected to a bottom of the rotary table body 101. The worm wheel 108 is connected with a worm screw 109, and the worm screw 109 is connected with a motor.

A base 102 is arranged under the rotary table body 101. A guiding plate 103 is arranged between the base 102 and the rotary table body 101, and the guiding plate 103 is a cylinder as a whole. A first guiding rail 104 is defined on an external surface of the guiding plate 103, and the first guiding rail 104 cooperates with a first roller 1002 on a catch plate 1004 on the shaping molds 1001 to move the catch plate 1004 up and down.

The guiding plate 103 is a continuous cylinder.

At least one disconnected portion is defined on the cylinder of the guiding plate 103. The disconnected portion is partly or entirely disconnected. The guiding plate 103 may be provided at stations where structures of the shaping molds 1001 move up and down. The guiding plate 103 is not needed for stations where height will not be adjusted.

A second guiding rail 105 is defined on an edge of the base 102, and the second guiding rail 105 cooperates with a second roller 1003 of the molding cup 1005 on the shaping mold 1001 to move the molding cup 1005 up and down.

The motor drives the rotary table body 101 to rotate the shaping molds 1001 which are connected to the rotary table body 101. The dough residue after cutting enters the opening 106 on the rotary table body 101, so as to be collected. A base 102 and a guiding plate 103 which are arranged under the rotary table body 101 are separated from the rotary table body and are static during working. A guiding rail is provided on both the base 102 and the guiding plate 103 respectively. Guiding rollers on the shaping molds 1001 are guided by the guiding rail to drive the catch plate 1004 and the molds to move up and down respectively.

According to the present application, the opening 106 may be in any shape, as long as it is convenient for collection of the dough residue. When the distance between an internal side of the shaping molds 1001 and a center of the rotary table assembly 100 is larger than the distance between an internal side of the opening 106 and the center of the rotary table assembly 100, no matter the shaping molds are arranged outside the opening 106 or projections of the shaping molds 1001 in a vertical direction partially or completely fall within the structure of the opening 106, the dough residue may conveniently fall into the opening 106 without extra guiding device.

The present application adopts worm screw 109 and worm wheel 108 to drive the rotation sleeve 107 and the rotary table body 101 to rotate. The separate driving structure replaces the complicated cam mechanism under the rotary table body and solves the problem of single motor driving all the parts. More space may be used for collection and processing of the dough residue.

Specifically, the shaping molds 1001 adopts conventional structure. Each shaping mold 1001 includes a catch plate 1004 connected with a first roller 1002 below through a first connecting rod; and a molding cup 1005 provided in the catch plate 1004 and connected with a second roller 1003 below through a second connecting rod. Since the shaping molds 1001 are rotated with the rotating disc 101 while the guiding plate 103 and the base 102 remain still, the catch plate 1004 moves up and down by the first roller moving along a wave-shaped track in the first guiding rail 104 on the external surface of the guiding plate. The second guiding rail 105 cooperates with the second roller 1003 to move the molding cups 1005 up and down. As a result, different parts of the shaping molds 1001 move up and down at different stations.

The guiding plate 103 cooperates with the base 102 to move the catch plate 1004 and molding cups 1005 on the shaping mold up and down at different positions. Disconnected portions may be provided on both the first guiding rail 104 on the guiding plate 103 and the second guiding rail 105 on the base 102, namely, the first guiding rail 104 and second guiding rail 105 are only applied to stations where the heights need to be adjusted. Non-continuously arranged guiding rails reduce cost in material and are simple in structure.

The sending and cutting part 200 includes a guiding pillar 201; a cylinder sleeve 202 sleeved on the guiding pillar 201; a cutter holding plate 203 connected with the cylinder sleeve 202 and connected with an eccentric wheel 206 through a connecting rod 205, where the eccentric wheel 206 is driven by a motor directly; a cutter 204 mounted under the cutter holding plate 203; a cutting plate 207 is arranged under the cutter 204; and a cutter hole 208 defined on the cutting plate 207 corresponding to the cutter 204. The cutter hole 208 cooperates with the cutter 204 to cut the dough wrappers.

The sending and cutting part 200 further includes two dough wrapper supporters 209 which are laterally arranged; two dough feeding rollers 210 mounted between the two dough wrapper supporters 209 in sequence and driven directly by a motor; a plurality of auxiliary rollers 211 arranged between the two dough feeding rollers 210, where the cutting plate 207 is arranged between the plurality of auxiliary rollers 211 and no conveyor belt which is essential to the conventional machines is needed; a supporting pillar 212 provided on an external side of each dough wrapper supporters 209 and provided with the guiding pillar 201 on a top end; a groove 213 defined on an external end of each dough wrapper supporter 209 and configured to accommodate a dough belt roller, where the dough belt is wound to rolls by the dough belt rollers which are placed in the grooves 213; a driven roller 214 provided above the dough feeding roller 210; and a drive belt 215 connected the two dough feeding rollers to rotate the two dough feeding rollers synchronously.

The dough belt is driven by the dough feeding rollers 210 to move toward the cutter 204. When the dough belt is conveyed below the cutter 204, the motor directly drives the eccentric wheel 206 to rotate, in such a manner the connecting rod 205 is rotated with the eccentric wheel 206. The cutter holding plate 203 is connected with and driven by the connecting rod 205 and the cylinder sleeve 202 to move up and down along the guiding pillar 201. The cutter 204 moves up and down with the cutter holding plate 203 and cooperates with the cutter hole 208 on the cutting plate 207, so as to cut the dough wrapper.

Compared to conventional structures, the sending and cutting part 200 of the present application omits an internal pushing device inside the cutter 204, a conveyor belt and a scraper. The eccentric wheel structure drives the cutter 204 to cut the dough wrappers, which makes the cutting more stable, simplifies the structure and saves space. The dough feeding rollers 210 cooperate with the auxiliary rollers 211 to transport the dough belt without the conveyor belt. Furthermore, with the driven roller 214 above the dough feeding rollers 210, more frictions are provided to the dough belt, thereby smoothly moving of the dough belt and avoiding sliding.

The stuffing injection part 300 includes a supporting frame 301; a hopper 302 arranged on the supporting frame; a rotating base 303 arranged on the supporting frame; a rotating valve 304 provided inside the rotating base 303 and driven directly by a motor to rotate; a stuffing inlet tube 305 connecting the hopper 302 and a top end of the rotating base 303; a stuffing outlet tube 306 connected below the rotating base 303; a transverse injecting tube 307 arranged on a lateral side of the rotating base 303; a transverse injecting rod 308 provided inside the transverse injecting tube 307; a longitude injecting tube 309 provided at an outlet of the stuffing outlet tube 306; a gear rack driving mechanism 310 driving the longitude injecting tube to move up and down and provided inside the supporting frame 301; an eccentric wheel driving mechanism 311 driving the transverse injecting rod 308 to move horizontally; a screw conveyor 315 provided inside the hopper 302; a worm driving mechanism 312 driving the screw conveyor 315 to rotate; a longitude injecting rod 313 provided inside the longitude injecting tube 309 and driven by the gear rack driving mechanism 310 to move up and down inside the longitude injecting tube 309 to push the stuffing downwardly from the outlet of the stuffing outlet tube 306; and an L-shaped tunnel 314 provided inside the rotating valve 304. Where the gear rack driving mechanism 310, the eccentric wheel driving mechanism 311 and the worm driving mechanism 312 are driven separately by different motors, which means each driving mechanism is driven by a different motor.

The motor drives the worm driving mechanism to rotate, and the worm driving mechanism drives the screw conveyor 315 inside the hopper 302 to stir stuffing. The stuffing is conveyed to the rotating valve 304 after being stirred by the screw conveyor 315. The motor directly drives the rotating valve 304 to rotate by 90 degrees counter-clockwise after the rotating valve 304 is filled with the stuffing. Then the motor drives the eccentric wheel driving mechanism 311 to drive the transverse injecting rod 308 to move horizontally to push the stuffing out from a bottom of the rotating valve 304 and move the stuffing to an outlet of the stuffing outlet tube 306. The motor drives the gear rack driving mechanism 310 to drive the longitude injecting rod 313 to move up and down to push down the stuffing from the outlet of the stuffing outlet tube 306. The motor drives the gear rack driving mechanism 310 to drive the longitude injecting tube 309 to move down to push the stuffing into the dough wrapper.

Each part of the present application is driven by an individual driving mechanism and an individual motor, which avoids complicated linkage structures, simplifies the whole structure and reduces the size of the machine. The gear rack driving mechanism 310, the eccentric wheel driving mechanism 311 and the worm driving mechanism 312 provide smooth transmission to connected structures, which ensures stability.

The pressing and shaping part 400 includes a supporting pillar 401; a pair of pressing molds 402 fixed on the supporting pillar 401, where a top of at least one of the pressing molds 402 is connected with a motor; two gears 403 provided on top ends of the pair of pressing molds 402 respectively, where the two gears 403 are engaged with each other; two pressing blocks 404 provided on two bottom ends of the pair of pressing molds 402 respectively, where the two pressing blocks are opposite to each other, and pressing surfaces of the pressing blocks are curved, and one of the pressing blocks is laterally concave, and the other of the pressing blocks is laterally convex; and two semicircle rotating plates 405, where the two gears are provided on respectively, where curved surfaces of the two rotating plates are opposite to each other.

The motor drives the top of one of the pressing molds 402 to rotate. Since the top ends of the pressing molds 402 are engaged with each other, the top of the other of the pressing molds 402 is driven to rotate, in such a manner the pressing blocks 404 below press each other. Since the pressing surfaces of the pressing blocks 404 are curved, a wave shape is formed at a sealed edge of the dough wrapper when pressing.

The pressing molds 402 of the present application adopt engaged gears 403 to pressing dough wrapper edges from above. The present application improves the conventional structures and prevents squeeze on other part of the dumplings due to the conventional horizontal pressing or pressing from below, so as to maintain appearance of the dumplings. The motor drives the pressing molds 402 to rotate directly, which simplifies the structure and ensures the forming effect.

A method for forming the stuffed food includes the following steps:
step 1: starting a sending motor to convey the dough belt; and starting a stirring motor to continuously stir the stuffing;
step 2: starting a sucking and pushing motor to suck the stuffing when the dough belt is conveyed forward by the sending motor with a dumpling wrapper' s length;
step 3: starting a cutter motor to cut the dough belt; and driving the rotating valve 304 by a rotating valve motor by 90 degrees counter-clockwise; and
step 4: starting the sucking and pushing motor to push the stuffing; and driving a rotary table by a rotary table motor by 90 degrees;
step 5: resetting the rotating valve 304 by the rotating valve motor; and starting an external cylinder motor and an internal cylinder motor simultaneously to respectively drive the external cylinder and the internal cylinder to move downwardly, so as to push the stuffing into the dough wrappers;
step 6: resetting the external cylinder motor and the internal cylinder motor after pushing the stuffing into the dough wrappers;
step 7: driving the rotary table by the rotary table motor by 90 degrees;
step 8: pressing and folding the dumplings for a while before releasing by a pressing motor; and
step 9: driving the rotary table by the rotary table motor by 90 degrees;
step 10: moving the dumplings to a discharge station by a discharge motor; and starting a clamping motor to clamp;
step 11: resetting the discharge motor and releasing the clamping motor, and storing the processed dumplings;
step 12: driving the rotary table by the rotary table motor by 90 degrees, so as to finish a whole process; and
step 13: backing to the step 1, and repeating.

The sending motor drives the dough feeding rollers 210 of the sending and cutting part 200;
the stirring motor drives the screw conveyor 315 inside the hopper 302 of the stuffing injection part 300;
the sucking and pushing motor drives the transverse injecting rod 308 of the stuffing injection part 300 to reciprocate horizontally;
the cutter motor drives the cutter 204 of the sending and cutting part 200 to move up and down, so as to cut the dough wrappers;
the rotating valve motor drives the rotating valve 304 of the stuffing injection part 300 to rotate;
the rotary table motor drives the rotary table body 101 of the rotary table assembly 100 to rotate; and
the external cylinder motor drives the longitude injecting tube 309 of the stuffing injection part 300 to reciprocate up and down.

The internal motor drives the longitude injecting rod 313 of the stuffing injection part 300 to reciprocate up and down.

The pressing motor drives the pressing mold 402 of the pressing and shaping part 400 to press and release;
the discharge motor drives a clamping structure of the discharge part 500 to move; and
the clamping motor drives the clamping structure of the discharge part 500 to clamp and release.

The above-mentioned motors may be servo motors.
step 4: starting the sucking and pushing motor to push the stuffing; and driving a rotary table by a rotary table motor by 90 degrees;
step 5: resetting the rotating valve 304 by the rotating valve motor; and starting an external cylinder motor and an internal cylinder motor simultaneously to respectively drive the external cylinder and the internal cylinder to move downwardly, so as to push the stuffing into the dough wrappers;
step 6: resetting the external cylinder motor and the internal cylinder motor after pushing the stuffing into the dough wrappers;
step 7: driving the rotary table by the rotary table motor by 90 degrees;
step 8: pressing and folding the dumplings for a while before releasing by a pressing motor; and
step 9: driving the rotary table by the rotary table motor by 90 degrees;
step 10: moving the dumplings to a discharge station by a discharge motor; and starting a clamping motor to clamp;
step 11: resetting the discharge motor and releasing the clamping motor, and storing the processed dumplings;
step 12: driving the rotary table by the rotary table motor by 90 degrees, so as to finish a whole process; and
step 13: backing to the step 1, and repeating.

The sending motor drives the dough feeding rollers 210 of the sending and cutting part 200;
the stirring motor drives the screw conveyor 315 inside the hopper 302 of the stuffing injection part 300;
the sucking and pushing motor drives the transverse injecting rod 308 of the stuffing injection part 300 to reciprocate horizontally;
the cutter motor drives the cutter 204 of the sending and cutting part 200 to move up and down, so as to cut the dough wrappers;
the rotating valve motor drives the rotating valve 304 of the stuffing injection part 300 to rotate;
the rotary table motor drives the rotary table body 101 of the rotary table assembly 100 to rotate; and
the external cylinder motor drives the longitude injecting tube 309 of the stuffing injection part 300 to reciprocate up and down.

The internal motor drives the longitude injecting rod 313 of the stuffing injection part 300 to reciprocate up and down.

The pressing motor drives the pressing mold 402 of the pressing and shaping part 400 to press and release;
the discharge motor drives a clamping structure of the discharge part 500 to move; and
the clamping motor drives the clamping structure of the discharge part 500 to clamp and release.

The above-mentioned motors may be servo motors.

## Claims

1. A method for forming stuffed food, comprising the following steps:
step 1: sending and cutting;
wherein a shaping mold (1001) on a rotary table body (101) is arranged below a sending and cutting station (20), and
wherein a dough wrapper is cut into a specified shape from a dough belt and falls on the shaping mold (1001) below, and
wherein a dough residue enters an opening (106) on the rotary table body (101) and is transported downwardly to be collected;
step 2: injecting;
wherein the shaping mold (1001) after receiving the dough wrapper is driven by the rotary table body (101) to rotate to a stuffing injection station (30) where the stuffing is injected onto the dough wrapper;
step 3: pressing and shaping;
wherein the shaping mold (1001) after injecting is driven by the rotary table body (101) to rotate to a pressing and shaping station (40) where the dough wrapper is pressed and shaped; and
step 4: discharging;
wherein the shaping mold (1001) after pressing and shaping is driven by the rotary table body (101) to rotate to a discharge station (50) where a final product is discharged;
wherein a stuffed food forming machine is applied to perform the method, and the stuffed food forming machine comprises:
a rotary table assembly (100) comprising the rotary table body (101), said rotary table body (101) defining the opening (106) configured to collect the dough residue,
the sending and cutting station (20); and
the stuffing injection station (30),
a plurality of shaping molds (1001) evenly distrubuted on the rotary table body (101),
wherein at least the sending and cutting station (20) and the stuffing injection station (30) are arranged around the rotary table assembly (100), and
wherein a distance between an internal side of the shaping mold (1001) rotated together with the rotary table body (101) and a center of the rotary table body (101) is larger than a distance between an internal side of the opening (106) and the center of the rotary table body (101).

2. The method for forming stuffed food of claim 1, **characterized in that**,
a sending and cutting part (200) is provided at the sending and cutting station (20), and
a stuffing injection part (300) is provided at the stuffing injection station (30).

3. The method for forming stuffed food of claim 2, **characterized in that**,
a pressing and shaping station (40) and a discharge station (50) are arranged in sequence around the rotary table assembly (100) and beside the stuffing injection station (30), and
wherein a pressing and shaping part (400) is provided at the pressing and shaping station (40), and
wherein a discharge part (500) is provided at the discharge station (50).

4. The method for forming stuffed food of claim 1, **characterized in that**,
the opening (106) is continuously defined on the rotary table body (101), and the opening (106) is circular or annular.

5. The method for forming stuffed food of claim 1, **characterized in that**,
the opening (106) is configured to penetrate an upper surface and a lower surface of the rotary table body (101).

6. The method for forming stuffed food of claim 1,. **characterized in that**,
upper surfaces of the plurality of shaping molds (1001) are located above an upper surface of the opening (106), and
wherein the plurality of shaping molds (1001) are arranged outside the opening (106), or
projections of the plurality of shaping modes (1001) in a vertical direction partially or completely falls within the opening (106).

7. The method for forming stuffed food of claim 1, **characterized in that**,
a rotation sleeve (107) connected with a worm wheel (108) is connected to a bottom of the rotary table body (101),
wherein the worm wheel (108) is connected with a worm screw (109), and the worm screw (109) is connected with a motor.

8. The method for forming stuffed food according to any one of claims 4 to 7, **characterized in that**,
the motor is configured to drive the rotary table body (101) to rotate the plurality of shaping molds (1001) connected to the rotary table body (101); the dough residue after cutting is configured to enter the opening (106) on the rotary table body (101) to be collected;
a base (102) and a guiding plate (103) which are arranged under the rotary table body (101) are configured to be separated from the rotary table body (101) and static during working;
a guiding rail is configured to be provided on the base (102) and the guiding plate (103) respectively; and
guiding rollers on the plurality of shaping molds (1001) are configured to be guided by the guiding rail to drive a catch plate (1004) and the plurality of shaping molds to move up and down respectively.

9. The method for forming stuffed food of claim 1, **characterized in that** the rotary table assembly (100) further comprises:
a base (102) arranged under the rotary table body (101);
a guiding plate (103) arranged between the base (102) and the rotary table body (101),
wherein the guiding plate (103) is a cylinder as a whole;
a first guiding rail (104) defined on an external surface of the guiding plate (103); and
a second guiding rail (105) defined on an outer edge of the base (102).

10. The method for forming stuffed food of claim 9, **characterized in that**,
the guiding plate (103) is a continuous cylinder.

11. The method for forming stuffed food of claim 9, **characterized in that**,
at least one disconnected portion is defined on the guiding plate (103), and wherein the disconnected portion is partly or entirely disconnected.

12. The method for forming stuffed food according to any one of claims 9 to 11, **characterized in that**,
each shaping mold (1001) comprises:
a catch plate (1004) connected with a first roller (1002) below through a first connecting rod; and
a molding cup (1005) provided in the catch plate (1004) and connected with a second roller (1003) below through a second connecting rod;
since the plurality of shaping molds (1001) are configured to be rotated with the rotating disc (101) while the guiding plate (103) and the base (102) remain still, the catch plate (1004) is configured to move up and down by the first roller (1002) moving along a wave-shaped track in the first guiding rail (104) on the external surface of the guiding plate (103); and
wherein the molding cup (1005) is configured to move up and down by the second guiding rail (105) cooperating with the second roller (1003); and
as a result, different parts of the plurality of shaping molds (1001) are configured to move up and down at different stations.

13. The method for forming stuffed food according to any one of claims 1 to 3, **characterized in that** the sending and cutting part (200) comprises:
a guiding pillar (201);
a cylinder sleeve (202) sleeved on the guiding pillar (201);
a cutter holding plate (203) connected with the cylinder sleeve (202) and connected with an eccentric wheel (206) through a connecting rod (205);
wherein the eccentric wheel (206) is driven by a motor directly;
a cutter (204) mounted under the cutter holding plate (203);
a cutting plate (207) arranged under the cutter (204); and
a cutter hole (208) defined on the cutting plate (207) corresponding to the cutter (204).

14. The method for forming stuffed food of claim 13, **characterized in that** the sending and cutting part (200) further comprises:
two dough wrapper supporters (209) laterally arranged;
two dough feeding rollers (210) mounted between the two dough wrapper supporters (209) in sequence and driven directly by a motor;
a plurality of auxiliary rollers (211) arranged between the two dough feeding rollers (210);
wherein the cutting plate (207) is arranged between the plurality of auxiliary rollers (211);
a supporting pillar (212) provided on an external side of each dough wrapper supporter (209) and provided with the guiding pillar (201) on a top end;
a driven roller (214) provided above the dough feeding roller (210); and
a drive belt (215) connected the two dough feeding rollers (210).

15. The method for forming stuffed food according to any one of claims 13 to 14, **characterized in that**,
the dough belt is configured to be driven by the dough feeding roller (210) to move toward the cutter (204);
when the dough belt is conveyed below the cutter (204), the motor is configured to drive directly the eccentric wheel (206) to rotate, in such a manner the connecting rod (205) is configured to be rotated with the eccentric wheel (206);
wherein the cutter holding plate (203) is configured to be connected with and driven by the connecting rod (205) and the cylinder sleeve (202) to move up and down along the guiding pillar (201); and
wherein the cutter (204) is configured to move up and down with the cutter holding plate (203) and cooperate with the cutter hole (208) on the cutting plate (207) to cut the dough wrapper.

16. The method for forming stuffed food according to any one of claims 1 to 3, **characterized in that** the stuffing injection part (300) comprises:
a supporting frame (301);
a hopper (302) arranged on the supporting frame (301);
a rotating base (303) arranged on the supporting frame (301);
a rotating valve (304) provided inside the rotating base (303) and driven directly by a motor to rotate;
a stuffing inlet tube (305) connecting the hopper (302) and a top end of the rotating base (303);
a stuffing outlet tube (306) connected below the rotating base (303);
a transverse injecting tube (307) arranged on a lateral side of the rotating base (303);
a transverse injecting rod (308) provided inside the transverse injecting tube (307);
a longitude injecting tube (309) provided at an outlet of the stuffing outlet tube (306);
a gear rack driving mechanism (310) driving the longitude injecting tube (309) to move up and down;
an eccentric wheel driving mechanism (311) driving the transverse injecting rod (308) to move horizontally;
a screw conveyor (315) provided inside the hopper (302); and
a worm driving mechanism (312) driving the screw conveyor (315) to rotate.

17. The method for forming stuffed food of claim 16, **characterized in that** the stuffing injection part (300) further comprises:
a longitude injecting rod (313) provided inside the longitude injecting tube (309) and driven by the gear rack driving mechanism (310) to move up and down inside the longitude injecting tube (309); and
an L-shaped tunnel (314) provided inside the rotating valve (304),
wherein the gear rack driving mechanism (310), the eccentric wheel driving mechanism (311) and the worm driving mechanism (312) are driven separately by different motors; and
wherein the gear rack driving mechanism (310) is provided inside the supporting frame (301).

18. The method for forming stuffed food according to any one of claims 16 to 17, **characterized in that**,
the motor is configured to drive the worm driving mechanism (312) to rotate, and the worm driving mechanism (312) is configured to drive the screw conveyor (315) inside the hopper (302) to stir stuffing;
the stuffing is configured to be conveyed to the rotating valve (304) after being stirred by the screw conveyor (315);
the motor is configured to drive directly the rotating valve (304) to rotate by 90 degrees counter-clockwise after the rotating valve (304) is filled with the stuffing;
the motor is configured to drive the eccentric wheel driving mechanism (311) to drive the transverse injecting rod (308) to move horizontally to push the stuffing out from a bottom of the rotating valve (304) and move the stuffing to an outlet of the stuffing outlet tube (306);
the motor is configured to drive the gear rack driving mechanism (310) to drive the longitude injecting rod (313) to move up and down to push down the stuffing from the outlet of the stuffing outlet tube (306); and
the motor is configured to drive the gear rack driving mechanism (310) to drive the longitude injecting tube (309) to move down to push the stuffing into the dough wrapper.

19. The method for forming stuffed food according to any one of claims 1 to 3, **characterized in that** the pressing and shaping part (400) comprises:
a supporting pillar (401);
a pair of pressing molds (402) fixed on the supporting pillar (401);
wherein a top of at least one of the pressing molds (402) is connected with a motor;
two gears (403) provided on top ends of the pair of pressing molds (402) respectively;
wherein the two gears (403) are engaged with each other;
two pressing blocks (404) provided on two bottom ends of the pair of pressing molds (402) respectively;
wherein the two pressing blocks (404) are opposite to each other; and
wherein pressing surfaces of the pressing blocks (404) are curved; and
wherein one of the pressing blocks (404) is laterally concave, and the other of the pressing blocks (404) is laterally convex; and
two semicircle rotating plates (405) where the two gears (403) are provided on respectively,
wherein curved surfaces of the two rotating plates (405) are opposite to each other.

20. The method for forming stuffed food of claim 19, **characterized in that**,
the motor is configured to drive the top of one of the pressing molds (402) to rotate;
since the top ends of the pressing molds (402) are engaged with each other, the top of the other of the pressing molds (402) is configured to be driven to rotate, in such a manner the pressing blocks (404) below are configured to press each other; and
since the pressing surfaces of the pressing blocks (404) are curved, a wave shape is formed at a sealed edge of the dough wrapper when pressing.

## Patentansprüche

1. Ein Verfahren zur Herstellung von gefüllten Lebensmitteln, einschließlich der folgenden Schritte:
Schritt 1: senden und aufschneiden;
wobei die Spritzgießmaschine (1001) auf dem Tischkörper (101) unter der Sende-und Schnittstation (20) eingestellt ist und
wobei die Flächen aus dem Teppichband in eine bestimmte Form geschnitten und auf die untere Form (1001) fallen und
wobei der Rückstand gelangt in die Öffnung (106) auf dem Drehteller (101) und wird zur Einsammlung nach unten transportiert.
Schritt 2: Injektion;
wobei die Form (1001) nach Erhalt der Flächenhaut vom Tischkörper (101) auf die Zuführstation (30) rotiert wird, wo das Material auf die Flächenhaut eingespritzt wird;
Schritt 3: Formen unterdrücken;
wobei die Spritzgießform (1001) nach der Einspritzung vom Drehscheibenkörper (101) in die Nachpressstation (40) rotiert wird, an der die Schale gepresst wird;
Schritt 4: Herausfinden;
wobei wird die Spritzgießform (1001) nach dem Nachpressen vom Drehtisch (101) auf den ausgehenden Ausgang (50) des Endprodukts gedreht;
wobei die Futtermittelformmaschinen werden zur Durchführung der Methode verwendet und umfassen folgende Futtermittelformmaschinen:
Die Baugruppe (100), die den Tischkörper (101) enthält, ist durch den angegebenen Rundtisch-Prinzipal (101) auf die Öffnung (106) beschränkt, die den Rest der Sammelfaser verursacht,
Die Sende-und Schneidstation (20);
und Zutritten in den Speisesaal (30),
mehrere Spritzgießformen (1001), die gleichmäßig über den Drehscheibenkörper (101) verteilt sind.
wobei sind mindestens Sende-und Schnittstation (20) und Zuführungsstation (30) um die Rundtisch-Baugruppe (100) angeordnet und
wobei der Abstand zwischen der Innenseite der Formgebung (1001) und dem Mittelpunkt des Tischkörpers (101) größer ist als der Abstand zwischen der Innenseite der Öffnung (106) und dem Mittelpunkt des Tischkörpers (101).

2. Die in der Forderung nach Rechte1 beschriebene Methode zur Herstellung von gefüllten Lebensmitteln hat den folgenden Charakter: Sende-und Schneidanteil (200) bei Sende-und Schneidstationen (20) und Die Injektion des Futters (300) wird in der Futtermittelanlage (30) eingerichtet.

3. Die in der Forderung 2 nach dem erforderlichen Recht beschriebene Methode zur Herstellung von gefüllten Lebensmitteln hat den folgenden Charakter, dass neben der Drehscheibenbaugruppe (100) und der Füllstandstation (30) eine Presskontur (40) und eine Zuführungsstation (50) eingerichtet sind, und
dabei ist die Entnahmeeinheit (500) an der Entnahmestation (50) eingestellt.

4. Die in der Forderung nach Rechte1 beschriebene Methode zur Herstellung von gefüllten Lebensmitteln hat den folgenden Charakter:
die genannten Öffnungen (106) sind fortlaufend auf das Basisbauteil des genannten Rundtischs (101) beschränkt und Die Öffnung (106) ist rund oder rund.

5. Die auf Grund des Ersuchens an das Recht erforderlichen1 beschriebene Methode zur Herstellung von gefüllten Lebensmitteln hat den folgenden Charakter:
die Öffnung (106) wird als obere und untere Oberfläche durch das Basisbauteil des Tisches (101) gebildet.

6. Die in der Forderung nach Rechte1 beschriebene Methode zur Herstellung von gefüllten Lebensmitteln hat den folgenden Charakter:
die obere Fläche mehrerer geformter Formen (1001) befindet sich oberhalb der oberen Fläche der genannten Öffnung (106) und Mehrere dieser Formen (1001) befinden sich außerhalb der genannten Öffnung (106) oder Mehrere Formmodus (1001) fallen entweder teilweise oder vollständig in die Öffnung (106) in vertikaler Richtung.

7. Die in der Forderung nach Rechte1 beschriebene Methode zur Herstellung von gefüllten Lebensmitteln hat den folgenden Charakter:
die mit dem Schneckenrad (108) verbundene Drehbuchse (107) ist an der Unterseite des Drehtellkörpers (101) angebracht. Dabei ist das Schneckenrad (108) mit der Schnecke (109) und die Schnecke (109) mit dem Motor verbunden.

8. Der in den Anspruchsvoraussetzungen 4 bis 7 beschriebene Gussform-Ansatz für Lebensmittel ist charakterisiert durch die Verwendung des genannten Motors zur Steuerung mehrerer geformter Formen (1001) auf dem genannten Drehteller (101), die mit dem genannten Drehkörper verbunden sind;
Der vorgeschnittene Abschaum wird so konfiguriert, dass er in die Öffnung (106) auf dem Drehteller (101) zur Sammlung gelangt. Die Basisstation (102) und die Führungsplatte (103) unter dem Hauptteil des Tisches (101) sind so konfiguriert, dass sie bei Betrieb vom Hauptteil des Tisches (101) getrennt und statisch sind;
Die Führungen sind so konfiguriert, dass sie auf Basis (102) und Führungsplatte (103) geschaltet werden. Die Leitrollen an den beschriebenen Spritzgussmodellen (1001) sind so konfiguriert, dass sie durch die beschriebenen Führungsschienen geführt werden, um die Platine (1004) und die beschriebenen Spritzgussmodelle nach oben bzw. unten zu bewegen.

9. Die in Anspruchsvoraussetzungen 1 beschriebene Methode zur Herstellung von Futtermitteln zeichnet sich durch folgende Merkmale aus:
Grundgestell (102) unter dem Hauptteil des Tisches (101) einstellen;
Richten Sie den Deflektor (103) zwischen der Basis (102) und dem Rumpf des Drehtisches (101) ein. wobei das Deflektor (103) insgesamt ein Zylinder ist;
die erste Schiene (104) begrenzt auf der äußeren Oberfläche des Deflektors (103); und die zweite Schiene (105) ist auf die Außenkante der Basis (102) begrenzt.

10. Die in der Forderung nach Rechte9 beschriebene Methode zur Herstellung von Lebensmitteln ist charakterisiert, dass das angebrachte Deflektorschild (103) ein kontinuierlicher Zylinder ist.

11. Die in Anspruchsanforderung 9 beschriebene Methode zur Herstellung von Futtermitteln ist durch mindestens einen Abschaltung auf das angebrachte Deflektor (103) beschränkt und die darin beschriebene Abschaltung teilweise oder vollständig abgeschnitten.

12. Die in den Berechtigungsanforderungen 9 bis 11 beschriebenen Methoden zur Herstellung von Lebensmitteln sind durch jede Form (1001) umfasst:
eine Aufnahmeplatte (1004) mit der unteren ersten Rolle (1002) über den ersten Hebel verbunden; und der geformte Becher (1005), der in der Karte (1004) eingerichtet und mit der unteren zweiten Rolle (1003) über den zweiten Joystick verbunden ist;
Da mehrere geformte Formen (1001) so konfiguriert sind, dass sie sich mit der Drehscheibe (101) drehen, während die Führungsplatte (103) und die Basis (102) statisch bleiben, ist die Platine (1004) so konfiguriert, dass sie sich über die erste Rolle (1002) entlang der äußeren Fläche der Führungsplatte (103) entlang der Wellenbahn der ersten Schiene (104) nach oben oder unten bewegt.
Wobei die Profiltasse (1005) ist so konfiguriert, dass sie sich über die zweite Schiene (105) nach oben oder unten bewegt, die mit der zweiten Walze (1003) zusammenarbeitet.
Infolgedessen werden verschiedene Teile der Form (1001) so konstruiert, dass sie sich in verschiedenen Stationen nach oben und unten bewegen.

13. Je nach Anspruchsvoraussetzungen zwischen 1 und 3 ist die Methode für die Herstellung von Lebensmitteln aus dem Gewürz durch die Beschreibung des Sende-und Schneidanteils (200) wie folgt charakterisiert: Führungsstütze (201); auf der Führungsstütze (201) angeordnete Zylinderstifte (202);
Anschliessend an der Zylinderachse (202) und mit dem Zentrifugalrad (206) über eine Stange (205) verbunden, wobei das Zentrifugalrad (206) direkt vom Motor angetrieben wird; Werkzeug unter der Halteplatte des Werkzeugs (203) montiert (204);
Unter dem Fräser (204) platzierte Schneideplatte (207); und die Werkzeugbohrung (208), die auf das Werkzeug (204) auf der Schneide (207) beschränkt ist.

14. Die in Anspruchsanforderung 13 beschriebene Methode zur Herstellung von Futtermitteln zeichnet sich durch folgende Merkmale aus: Senden und Aufschneiden der Teile (200) wie folgt: Zwei seitliche Auflager (209) Zwei Übertragungswalzen (210), die nacheinander zwischen den beiden Seitenriemenhalterungen (209) montiert werden und direkt vom Motor angetrieben werden; Mehrere Hilfsrollen (211), die zwischen den beiden Zufuhrwalzen (210) aufgestellt sind; Dabei ist die Schneideplatte (207) zwischen mehreren Hilfsrollen (211) angeordnet. Tragende Stütze (212), die an der Außenseite jeder Fläche des Außenauflagers (209) und an der Oberseite mit einer Führungsstütze (201) eingerichtet ist; Die Stößelrolle (214) über der Vorschubrolle der Sammelfläche (210) einstellen; und das angetriebene Band (215), das die Zufuhrwalze (210) zweier Sammelflächen verbindet.

15. Die in den Artikeln 13 bis 14 beschriebenen Methoden zur Herstellung von Nahrungsmitteln sind durch Der Teppich ist so konstruiert, dass er von der Vorschubwalze (210) in Richtung des Fräsers (204) angetrieben wird. Wenn der Teppich unter dem Werkzeug (204) transportiert wird, ist der Motor so konfiguriert, dass er die Drehung des Exzentrizitätsrads (206) direkt antreibt, so dass der Hub (205) so konfiguriert ist, dass er mit dem Exzentrizitätsrad (206) rotiert wird, wobei die angebrachte Werkzeughalterplatte (203) so konfiguriert ist, dass sie mit dem beschriebenen Hebel (205) und der angebrachten Zylinderlage (202) verbunden und angetrieben wird, um sich entlang der beschriebenen Führungsstütze (201) nach oben oder unten zu bewegen; Der Fräser (204) wird so konstruiert, dass er sich mit der Halteplatte (203) nach oben und unten bewegt und mit der Werkzeugbohrung (208) auf der Schneideplatte (207) zusammenpasst, um die Trägerfläche zu schneiden.

16. Je nach Anspruchsvoraussetzungen (1 bis 3) wird die Methode zur Herstellung von Lebensmitteln für die Zutaten durch folgende Zutaten gekennzeichnet (300): Lastabtrag (301); Gefüllter Kampf (302) auf Abstützung (301); Drehgestell (303) am Ständer (301) montiert; Drehventil (304), eingestellt im Drehgestell (303) und direkt vom Motor gesteuert; Anschluss des Materialeinlasses (302) an der Oberseite des Kampfes (303) und des Drehgestells (305); die Speiseröhre (306) unter der Drehbasis (303) anschließen; Horizontale Einspritzgeräte (307), die auf der Seite der Drehbasis (303) angeordnet sind; Richten Sie den seitlichen Anspritzstab (308) in der seitlichen Einspritzfasse (307) ein. Vertikale Einspritzpumpe (309), die am Auslauf der Angussbuchse (306) eingerichtet ist; Antrieb des Zahnstangengetriebes (310) für Hochfrequenzsprinkler (309); Antrieb des Exzentrizitätsradantriebs (311) für horizontale Bewegung des Querstifts (308); Der spiralförmige Förderer (315) befindet sich im Inneren des Kampfes (302); und Antrieb Der Schneckenantrieb (315) dreht sich um den Schneckenantrieb (312).

17. Der in Anspruchsvoraussetzung16 beschriebene Ansatz für die Herstellung von Futtermitteln zeichnet sich durch folgende Merkmale aus: Vertikale Einspritzpumpe (313), die in der vertikalen Einspritzpumpe (309) eingerichtet ist und vom Zahnstangengetriebe (310) angetrieben wird, um sich in der vertikalen Einspritzform (309) nach oben oder unten zu bewegen; sowie der im Drehventil (304) eingerichtete L-Profil-Kanal (314), bei dem der Zahnstangengetriebe (310), der Exzentrizitätsradantrieb (311) und der Schneckenantrieb (312) separat von verschiedenen Motoren gesteuert werden; und wobei der Zahnstangenantrieb (310) im Rahmen des Trägers (301) eingestellt ist.

18. Je nach Anspruchsvoraussetzung ist der unter 16 bis 17 beschriebene Ansatz für die Gewürzgurmanipulation charakteristisch dafür, dass der genannte Schneckenantrieb (312) im Schneckenantrieb (312) den Schneckenantrieb (312) im genannten Kampfanzug (302) rührt. Das Material ist so konfiguriert, dass es nach dem Rühren vom Wälzantrieb (315) zum Drehventil (304) transportiert wird;
Der Motor ist so konfiguriert, dass er um 90 Grad gegen den Uhrzeigersinn gedreht wird, nachdem das Drehventil (304) mit Füllmitteln gefüllt ist; Antrieb Motorized Exzentrizitätsantrieb (311) Antrieb Querstift (308) horizontale Bewegung, schieben Sie den Zufluss von der Unterseite des Drehventils (304) nach oben und schieben Sie das Material zum Ausgang des Zuführungsventils (306);
Der Motor ist so konfiguriert, dass der Antrieb des Zahnstangengetriebes (310) die Längsbewegung (313) nach oben und unten antreibt, um das Material vom Auslauf des Materialauslasses (306) abzuschieben;
Der Motor ist so konfiguriert, dass der Antrieb des Zahnstangengetriebes (310) den vertikalen Einspritzkanal (309) nach unten bewegt, um das Material in die Flächenhaut zu schieben.

19. Je nach Anspruchsvoraussetzungen zwischen 1 und 3 ist die Gussform-Methode charakteristisch dafür, dass der geforderte Gussform (400) die Lagerstütze (401) umfasst.
Ein Formpaar (402), das an der Stütze (401) befestigt ist;
Der Motor ist an der Oberseite von mindestens einer der Formen (402) angeschlossen. Zwei Zahnräder (403), die jeweils auf der Oberseite eines Stanzstempelpaars (402) stehen; Zwei der Zahnräder (403) sind ineinander eingepasst. Zwei Druckblöcke (404) werden jeweils an beiden Enden eines Formpaars (402) eingerichtet.
Zwei der Druckblöcke (404) sind relativ zueinander, wobei die Pressfläche des Pressblocks (404) verbogen ist;
Einer der Druckblöcke (404) ist seitlich eingedrückt, der andere (404) ist seitlich ausgeworfen. und zwei halbrunde Drehscheiben (405),
wobei die beiden Räder (403) jeweils auf zwei halbrunden Drehplatten (405) eingestellt sind, wobei die Flächen der beiden Drehplatten (405) sich gegenüberliegen.

20. Es stellt entsprechend der Forderung nach Rechte19 fest, dass der betreffende Motor als eine der oben genannten Spannungen (402) konfiguriert ist, um ein Gewölbe zu formen; Da die Oberseite der Druckform (402) miteinander verbunden ist, wird die Oberseite der anderen Form (402) getrieben, so dass der nachfolgende Pressblock (404) zu gegenseitigem Stauchen konstruiert wird. Da die Pressfläche des Pressblocks (404) verbogen ist, entsteht beim Verpressen an der Kante der Dichtung eine Welle.

## Revendications

1. Une méthode de formation d'aliments de remplissage comprenant les étapes suivantes:
Étape 1: l'envoi et la découpe;
dans ce cas, le moule moulé (1001) sur le corps de table tournante (101) est disposé sous la position de travail d'émission et de découpe (20), et
où la peau est coupée de la bande de pâte en une forme spécifique et tombe sur le moule formé (1001) ci-dessous; et où les résidus de pâte entrent dans l'ouverture (106) sur le corps de plaque tournante (101) et sont transportés vers le bas pour être collectés;
Étape 2: injection;
Le moule formé (1001) est entraîné par le corps de table tournante (101) à la station d'injection de farce (30) après réception de la pâte, où la farce est injectée dans la pâte;
Étape 3: suppression du moulage;
Parmi eux, le moule moulé après injection (1001) pivote du corps de plaque tournante (101) à la position de moulage par compression (40), où la peau est moulée par compression;
Étape 4: sortie;
Parmi eux, le moule moulé après le moulage par compression (1001) est entraîné par le corps de table rotative (101) à la station d' évacuation (50) du produit final;
La machine de formage de farce est utilisée pour exécuter la méthode et la machine de formage de farce comprend:
L'ensemble de table tournante (100) comprenant le corps de table tournante (101), le corps de table tournante (101) limite l'ouverture (106) construite pour collecter les restes de la pâte.
Stations de transmission et de découpage (20);
Et puis station d'injection de remplissage (30), plusieurs moules moulés (1001) répartis uniformément sur le corps de plaque tournante (101).
Parmi eux, au moins la station de transmission et de découpe (20) et la station d'injection de remplissage (30) sont disposées autour de l'ensemble de table tournante (100), et où la distance entre l'intérieur du moule formé (1001) qui pivote avec le corps de table tournante (101) et le centre du corps de table tournante (101) est supérieure à la distance entre l'intérieur de l'ouverture (106) et le centre du corps de table tournante (101).

2. Les méthodes utilisées pour la formation des aliments de remplissage, telles qu'elles sont décrites dans la revendication 1, se caractérisent par:
la partie d' émission et de découpe (200) est réglée à la station d' émission et de découpe (20), et la partie d'injection de remplissage (300) est disposée à la station d'injection de remplissage (30).

3. Les méthodes utilisées pour la formation des aliments de remplissage, telles qu'elles sont décrites dans la revendication 2, se caractérisent par:
une station de moulage par compression (40) et une station de vidange (50) sont disposées l'une après l'autre autour de l'assemblage de plaque tournante (100) et à côté de la station d'injection de remplissage (30), et où l'ensemble de moulage par compression (400) est défini à la station de moulage par compression (40), et une pièce de déchargement (500) est disposée à la station de déchargement (50).

4. Les méthodes utilisées pour la formation des aliments de remplissage, telles qu'elles sont décrites dans la revendication 1, se caractérisent par: l'ouverture (106) est continuellement limitée au corps de table tournante (101), et l'ouverture (106) est circulaire ou circulaire.

5. Les méthodes utilisées pour la formation des aliments de remplissage, telles qu'elles sont décrites dans la revendication 1, se caractérisent par: l'ouverture (106) est construite de manière à pénétrer les surfaces supérieure et inférieure du corps de table tournante (101).

6. La méthode utilisée pour former la nourriture remplie selon la revendication 1 est **caractérisée par**: La surface supérieure de plusieurs moules formés (1001) est située au-dessus de la surface supérieure de l'ouverture (106), et Plusieurs de ces moules formés (1001) sont disposés à l'extérieur de l'ouverture (106), ou plusieurs moules formés (1001) sont partiellement ou complètement projetés dans la direction verticale de l'ouverture (106).

7. Les méthodes utilisées pour la formation des aliments de remplissage, telles qu'elles sont décrites dans la revendication 1, se caractérisent par:
la douille rotative (107) connectée à l'engrenage à vis sans fin (108) est connectée au bas du corps de plaque tournante (101).
Parmi eux, l'engrenage à vis sans fin (108) est connecté à la vis sans fin (109) et la vis sans fin (109) est connectée au moteur.

8. L'invention concerne un procédé de moulage d'aliments farcis selon l'une quelconque des revendications 4 à 7, **caractérisé par le fait que** le moteur est utilisé pour entraîner plusieurs moules moulés (1001) reliés par rotation au corps de plaque tournante (101),
Les scories de surface découpées sont disposées dans une ouverture (106) sur le corps de plaque tournante (101) pour être collectées;
La base (102) et la plaque de guidage (103) disposées sous le corps de table tournante (101) sont disposées de manière à être séparées et statiques du corps de table tournante (101) en fonctionnement;
Les rails sont disposés sur la base (102) et sur la plaque de guidage (103) respectivement; Les rouleaux de guidage sur les multiples moules de moulage (1001) sont configurés pour être guidés par les rails afin d'entraîner les plaques de carte (1004) et les moules de moulage multiples à se déplacer respectivement vers le haut et vers le bas.

9. L'invention concerne un procédé de formation d'aliments farcis selon la revendication 1, **caractérisé par le fait que** l'ensemble de plaque tournante (100) comprend également:
la base (102) située sous le corps principal (101) de la table tournante;
une plaque de guidage (103) est disposée entre la base (102) et le corps de table tournante (101), où la plaque de guidage (103) est globalement un cylindre;
premier rail de guidage (104) limité à la surface extérieure du déflecteur (103);
et le second rail (105) limité au bord extérieur de la base (102).

10. L'invention concerne un procédé de moulage d'aliments farcis selon la revendication 9, qui se **caractérise par** un cylindre continu sur le déflecteur (103).

11. La méthode utilisée pour former la nourriture farcie selon la revendication 9 est **caractérisée par le fait qu'**au moins une partie de rupture est limitée au déflecteur (103) et que la partie de rupture est partiellement ou totalement coupée.

12. Les méthodes utilisées pour la formation des aliments de remplissage, telles qu'elles sont décrites dans les réclamations nos 9 à 11, se caractérisent par: chaque moule formé (1001) comprend:
plaque d'acquisition (1004) connectée par la première bielle au premier rouleau (1002) inférieur;
et puis tasse moulée (1005) disposée dans la carte (1004) et connectée au second rouleau (1003) inférieur par la deuxième bielle;
étant donné que plusieurs moules formés (1001) sont configurés pour pivoter avec le disque rotatif (101) et que la plaque de guidage (103) et la base (102) restent fixes, la carte (1004) est configurée pour se déplacer vers le haut et le bas sur la surface extérieure de la plaque de guidage (103) par le biais du premier rouleau (1002) le long de l'orbite ondulée dans le premier rail de guidage (104);
et puis La coupe moulée (1005) est configurée pour se déplacer vers le haut et vers le bas à l'aide du second rail (105) en collaboration avec le second rouleau (1003);
et puis en conséquence, différentes parties de plusieurs moules formés (1001) sont construites pour se déplacer vers le haut et vers le bas sur différents postes de travail.

13. Les méthodes utilisées pour former des aliments farcis selon l'une ou l'autre des revendications 1 à 3 se caractérisent par le fait que la partie d'envoi et de découpe (200) comprend: Poteaux porteurs (201);
manchon de cylindre (202) fixé sur le poteau de guidage (201);
plaque de recouvrement (203) connectée à l'enveloppe de cylindre (202) et à la roue excentrique (206) par l'intermédiaire de la bielle (205);
parmi eux, la roue excentrique (206) est entraînée directement par le moteur; Outil (204) installé sous la plaque de rétention de l'outil (203);
plaque de coupe (207) disposée sous l'outil (204);
et puis correspond au trou de l'outil (208) limité à la plaque de coupe (207) par l'outil (204).

14. Les méthodes utilisées pour former des aliments farcis, telles qu'elles sont décrites dans la réclamation no 13, se caractérisent par le fait que la partie de distribution et de découpe (200) comprend également:
deux supports en cuir chevelu disposés horizontalement (209);
deux rouleaux de transmission de pâte (210) montés l'un après l'autre entre deux supports de pâte (209) et dirigés directement par le moteur;
plusieurs rouleaux auxiliaires (211) disposés entre deux rouleaux d'alimentation de surface (210); Parmi eux, la plaque de découpe (207) est disposée entre plusieurs rouleaux auxiliaires (211);
un poteau de support (212) placé à l'extérieur de chaque élément de support de surface (209) et un poteau de guidage (201) placé en haut;
définit le rouleau suiveur (214) au-dessus du rouleau d'alimentation de la pâte (210);
et puis la bande pilote (215) relie les deux rouleaux d'alimentation de la pâte (210).

15. Les méthodes utilisées pour la formation des aliments de remplissage, telles qu'elles sont décrites dans les réclamations nos 13 à 14, se caractérisent par:
la bande de la pâte est formée et entraînée par le rouleau d'alimentation de la pâte (210) pour se déplacer vers l'outil (204);
lorsque la bande de pâte est transmise sous l'outil (204), le moteur est configuré pour entraîner directement la rotation de la roue excentrique (206), de sorte que la bielle (205) est configurée pour tourner avec la roue excentrique (206);
la plaque de maintien d'outil (203) est configurée pour se connecter à la bielle (205) et à l'enveloppe de cylindre (202) et est entraînée par celle-ci pour se déplacer vers le haut ou vers le bas le long du poteau de guidage (201);
et puis où l'outil (204) est construit pour se déplacer vers le haut et vers le bas avec la plaque de conservation de l'outil (203) et s'ajuste au trou (208) de l'outil sur la plaque de coupe (207) pour couper la face.

16. Les méthodes utilisées pour former des aliments farcis selon l'une ou l'autre des revendications 1 à 3 se caractérisent par le fait que la partie d'injection de farce (300) comprend:
ossature de support (301);
trémie (302) disposée sur le support (301);
base rotative (303) installée sur le support (301);
soupape de rotation (304), placée dans la base de rotation (303) et entraînée directement par le moteur;
tube d'entrée de remplissage (305) en haut de la trémie (302) et de la base rotative (303);
tube de remplissage (306) connecté sous la base rotative (303);
tube d'injection transversal (307) disposé sur le côté de la base pivotante (303);
la tige d'injection transversale (308) située à l'intérieur du tube d'injection transversal (307);
tube d'injection longitudinal (309), installé à la sortie du tube de sortie de remplissage (306);
mécanisme d'entraînement à crémaillère (310) qui entraîne le déplacement vers le haut ou vers le bas du tube d'injection longitudinal (309);
mécanisme d'entraînement de roue excentrique (311) qui entraîne le mouvement horizontal de la tige d'injection transversale (308);
convoyeur à vis (315) disposé à l'intérieur de la trémie (302);
et puis mécanisme d'entraînement à vis sans fin (312) qui pilote la rotation du convoyeur à vis sans fin (315).

17. Les méthodes utilisées pour former des aliments farcis, telles qu'elles sont décrites dans la réclamation no 16, se caractérisent par le fait que la partie d'injection de farce (300) comprend également:
tige d'injection longitudinale (313), disposée dans le tube d'injection longitudinal (309) et entraînée par le mécanisme d'entraînement de crémaillère d'engrenage (310) pour se déplacer vers le haut et vers le bas dans le tube d'injection longitudinal (309);
et puis définit le canal en l (314) à l'intérieur de la valve de rotation (304).
Parmi eux, le mécanisme d'entraînement de crémaillère (310), le mécanisme d'entraînement de roue excentrique (311) et le mécanisme d'entraînement de vis sans fin (312) sont dirigés par des moteurs différents;
Et puis Parmi eux, le mécanisme d'entraînement de crémaillère (310) est disposé dans le cadre de support (301).

18. Les méthodes utilisées pour la formation des aliments de remplissage, telles qu'elles sont décrites dans les réclamations nos 16 à 17, présentent les caractéristiques suivantes:
le moteur est configuré pour entraîner le mécanisme d'entraînement de vis sans fin (312) à tourner, et le mécanisme d'entraînement de vis sans fin (312) est configuré comme un convoyeur en spirale (315) dans la trémie d'entraînement (302);
la garniture est configurée pour être transportée à la valve rotative (304) après malaxage par le convoyeur à vis (315);
le moteur est configuré pour entraîner directement la valve de rotation (304) de 90 degrés dans le sens inverse des aiguilles d'une montre après que la valve de rotation (304) est remplie de remplissage;
le mécanisme d'entraînement de roue excentrique piloté par moteur (311) entraîne le déplacement horizontal de la tige d'injection transversale (308), retire la farce du bas de la valve rotative (304) et la déplace vers la sortie du tube de sortie de remplissage (306);
le moteur est configuré pour entraîner le mécanisme d'entraînement de crémaillère (310) afin d'entraîner la tige d'injection longitudinale (313) à se déplacer vers le haut et vers le bas, poussant ainsi la farce hors de la sortie du tube de sortie de remplissage (306);
et puis Le moteur est configuré pour entraîner le mécanisme d'entraînement de crémaillère (310) afin d'entraîner le tube d'injection longitudinal (309) à se déplacer vers le bas pour pousser la farce dans la peau.

19. Les méthodes utilisées pour former des aliments farcis selon l'une ou l'autre des revendications 1 à 3 se caractérisent par le fait que la partie de moulage par compression (400) comprend: Poteau porteur (401);
une paire de plaques de serrage (402) fixées au poteau de support (401);
la partie supérieure d'au moins un des modèles piézométriques (402) est reliée à un moteur électrique;
deux engrenages (403) disposés l'un sur l'autre au sommet d'une paire de moules (402);
deux des engrenages (403) s'engrènent l'un l'autre; Deux blocs de pression (404) disposés sur les deux extrémités inférieures d'une paire de modèles de pression (402); deux de ces blocs de pression (404) sont opposés l'un à l'autre;
et puis La surface de pressage du bloc de pressage (404) est courbée;
et puis L'un des blocs de pression (404) est encastré horizontalement et l'autre (404) est saillant latéralement;
et puis deux plaques rotatives semi-circulaires (405) avec deux engrenages (403) respectivement, les surfaces des deux plaques tournantes (405) sont opposées.

20. Les méthodes utilisées pour la formation des aliments de remplissage, telles qu'elles sont décrites dans la réclamation no 19, se caractérisent par:
le moteur est configuré pour entraîner la rotation supérieure de l'un des modèles de pression (402);
la partie supérieure de l'autre moule (402) étant liée les unes aux autres, la partie supérieure de l'autre moule (402) est construite pour être entraînée et pivotée, de sorte que le bloc de pression inférieur (404) est construit pour s' écraser les uns les autres; et puis étant donné que la surface d'extrusion du bloc extrudé (404) est courbée, une ondulation se forme au niveau des bords hermétiques de la peau lors de l'extrusion.
